(19) 

Europäisches
Patentamt
European
Patent Office
Office européen
des brevets

(11) **EP 4 394 809 A1**

(12) **EUROPEAN PATENT APPLICATION**
published in accordance with Art. 153(4) EPC

(43) Date of publication:
**03.07.2024 Bulletin 2024/27**

(21) Application number: **22872050.4**

(22) Date of filing: **22.09.2022**

(51) International Patent Classification (IPC):
**H01F 1/057** (2006.01)

(52) Cooperative Patent Classification (CPC):
Y02P 80/30; Y02T 10/64

(86) International application number:
**PCT/CN2022/120487**

(87) International publication number:
**WO 2023/046005 (30.03.2023 Gazette 2023/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.09.2021 CN 202111107088**

(71) Applicants:
• **Yantai Zhenghai Magnetic Material Co., Ltd.**
**Yantai Shandong 264006 (CN)**
• **Jianghua Zhenghai Minmetals Advanced
Materials Co., Ltd.**
**Yongzhou, Hunan 425000 (CN)**

(72) Inventors:
• **YU, Yongjiang**
**Yantai, Shandong 264006 (CN)**
• **LIU, Lei**
**Yantai, Shandong 264006 (CN)**
• **WANG, You Hua**
**Yantai, Shandong 264006 (CN)**
• **MA, Dan**
**Yantai, Shandong 264006 (CN)**
• **JIANG, Yunying**
**Yantai, Shandong 264006 (CN)**

(74) Representative: **Gille Hrabal
Partnerschaftsgesellschaft mbB
Patentanwälte
Brucknerstraße 20
40593 Düsseldorf (DE)**

(54) **HIGH-REMANENCE NEODYMIUM-IRON-BORON MAGNET, AND PREPARATION METHOD THEREFOR AND USE THEREOF**

(57) The present invention provides a high-remanence neodymium-iron-boron magnet, and a preparation method and the use thereof. The neodymium-iron-boron magnet of the present invention has crystal grains with an R-T-B type compound as a main structure, and a grain boundary phase. By means of adjusting the proportional relation of elements such as B, Cu, Ga, RE and Ti, the neodymium-iron-boron magnet of the present invention can achieve a relatively high main phase grain volume ratio and effectively restrain the proportion of a B-rich phase in the grain boundary phase, such that the magnet has relatively high Br, and also has both good Hcj and squareness performance.

EP 4 394 809 A1

## Description

## PRIORITY AND RELATED APPLICATIONS

The present application claims priority to the prior application with the patent application No. 202111107088.3, entitled "HIGH-REMANENCE NEODYMIUM-IRON-BORON MAGNET, AND PREPARATION METHOD AND USE THEREOF", and filed with the China National Intellectual Property Administration on September 22, 2021, which is incorporated herein by reference in its entirety.

## TECHNICAL FIELD

The present disclosure belongs to the field of neodymium-iron-boron magnets, and in particular, relates to a sintered neodymium-iron-boron magnet, a preparation method and use thereof.

## BACKGROUND

Sintered neodymium-iron-boron magnet, as the fourth generation permanent magnet material, is known as the "permanent magnet king" with its excellent magnetic properties, and is widely applied to various fields including automobile, wind power, compressor, elevator, industrial automation, and the like.

Since entering the 21st century, more attention has been paid to the improvement of the coercivity performance of magnet steels. Especially, under the cost pressures caused by a rapid increase in starting material prices due to the supply imbalance of heavy rare earth resources with relatively scarce reserves, numerous scholars and enterprises have begun research on maintaining or even improving the coercivity performance on the premise of reducing the usage of the heavy rare earths so as to ensure the demagnetization resistance of the magnet steels at working temperatures, such as through a fine grain technology or a grain boundary diffusion technology.

With the rise of the new energy vehicle market and the introduction of new policies for energy-efficient and energy-saving household appliances, the miniaturization of motors and high energy efficiency indicators have become new concerns, and in order to ensure the reduction of the size of the motors as much as possible while maintaining or even improving the output power of the motors, the magnet steel serving as a power core must possess a high energy density, namely high remanence.

Theoretically, the maximum remanence of a pure neodymium-iron-boron magnet is 1.61 T. At present, the highest remanence obtainable under laboratory conditions is 1.56 T, but due to process difficulty, equipment precision, and the like, it is far from sufficient to realize mass production. Meanwhile, the magnet steels used in the fields of new energy vehicles, energy-saving household appliances and the like have a mainstream remanence ranging from 1.10 T to 1.40 T. If the remanence can be further improved, it can effectively facilitate the miniaturization of the motors and meet the requirements of high energy efficiency levels.

In patent CN11724985A, an alloy is smelted with a low-B component (0.80-0.93 wt%) to create a certain amount of transition metal phase ($R_6T_{13}M$) for the preparation of a sintered magnet (or a post-diffusion magnet), and then the sintered magnet (or the post-diffusion magnet) is subjected to a heat holding treatment at a temperature of not lower than 400 °C and not higher than 600 °C for not less than 10 s and not more than 30 min, such that it has both high remanence and high Hcj, and the remanence thereof can reach 1.41 T. The use of the low-B component causes the magnet to form the $R_6T_{13}M$ phase with a relatively large width at a grain boundary, but according to the requirement of a theoretical formula for the remanence of neodymium-iron-boron magnets, the volume proportion of a main phase is reduced, which inevitably leads to a decrease in the Br of the magnet. In addition, although the $R_6T_{13}M$ phase in the grain boundary is beneficial to the improvement of Hcj, the stability of the grain boundary phase is poor, the requirement on the control of equipment process difficulty is high, and the squareness of the magnet is easy to fluctuate and cannot be stably maintained above 0.95, thereby directly affecting the demagnetization resistance of the motor at high temperatures.

In patent CN10744699A, an alloy is smelted by adopting a low-B component (0.94 wt%) to prepare an alloy thin slice with a columnar crystal proportion of not less than 95%, which is processed in a rotary hydrogen decrepitation furnace and subjected to jet milling with high-pressure nitrogen to prepare a jet-milled powder with a size of 3.75-3.9 $\mu$m, such that an ultrahigh-performance neodymium-iron-boron magnet with Br of 1.44-1.48 T and Hcj reaching 14-16 kOe can be prepared. The columnar crystal proportion of the alloy slice is controlled, the HD production process is optimized, the granularity range of the jet-milled powder is controlled, and the sintering process is matched accordingly, thus obtaining the high-Br and high-Hcj magnet. However, the magnet has an extremely low RE content, and during sintering, there is not enough Nd-rich phase to uniformly encapsulate the main phase grains for sintering assistance. Meanwhile, the absence of grain boundary phases such as boride of Zr or Ti easily leads to abnormal growth of the grains, so that the squareness is deteriorated due to the poor uniformity of the magnet grain size. Although the magnet possesses high Br and high Hcj, the areas with abnormal growth of the grains are very prone to reverse magnetization, so that the demagnetization resistance of the magnet is deteriorated.

## SUMMARY

In order to solve the technical problems described above, the present disclosure proposes a high-remanence neodymium-iron-boron magnet, and a preparation method and use thereof.

The present disclosure provides a neodymium-iron-boron magnet, wherein the neodymium-iron-boron magnet has grains that take an R-T-B type compound as a main structure, and a grain boundary phase; and the neodymium-iron-boron magnet comprises:

not less than 28 wt% and not more than 30 wt% of R, wherein R represents a rare earth element selected from Nd, or Nd plus at least one of the following rare earth elements: Pr, La, Ce, Dy, Tb, and Ho;

not less than 63 wt% and not more than 70 wt% of T, wherein T is selected from Fe and/or Co, wherein Fe accounts for not less than 99 wt% of the total amount of T;

not less than 0.98 wt% and not more than 1.05 wt% of B;

not less than 0 wt% and not more than 0.3 wt% of M1, wherein M1 is selected from Cu and Ga, and Ga accounts for not less than 75 wt% of the total amount of M1; and

not less than 0.04 wt% and not more than 0.15 wt% of M2, wherein M2 is selected from at least one of Zr, Ti, and Nb.

Preferably, M2 is selected from Ti.

According to an embodiment of the present disclosure, in starting materials for preparation of the neodymium-iron-boron magnet, the number of atoms of the elements further satisfies the following condition:

$$2.15 \leq [R]/([B] - 2[M2]) \leq 2.35,$$

wherein [R] is an atomic percentage of R, [B] is an atomic percentage of B, and [M2] is an atomic percentage of M2. In the present disclosure, the atomic percentage means [the number of a certain atom]/[the total number of various atoms in the starting materials].

Illustratively, [R]/([B] - 2[M2]) is 2.15, 2.2, 2.24, 2.29, or 2.3.

According to an embodiment of the present disclosure, when R is selected from Nd plus at least one of the following rare earth elements: Pr, La, Ce, Dy, Tb, and Ho, the total mass of the heavy rare earth elements such as Dy, Tb, Ho and the like accounts for not more than 1 wt%, preferably not more than 0.5 wt%, of the mass of the neodymium-iron-boron magnet.

According to an embodiment of the present disclosure, the neodymium-iron-boron magnet has the following magnetic properties:

(1) a squareness of not less than 0.95, e.g., 0.95, 0.96, 0.97, 0.98, or 0.99;

(2) Br of not less than 1.44 T, e.g., 1.45 T, 1.46 T, 1.47 T, 1.48 T, 1.49 T, or 1.5 T; and

(3) Hcj of not less than 1100 kA/m, e.g., 1100 kA/m, 1110 kA/m, 1120 kA/m, 1130 kA/m, 1140 kA/m, 1150 kA/m, 1160 kA/m, 1170 kA/m, 1180 kA/m, 1190 kA/m, or 1200 kA/m.

The present disclosure strictly limits the content of each element in the starting materials for the preparation, with details as follows:

Since the magnetic polarization strength of R-T-B based main phase grains composed of rare earth elements such as Pr, Dy, Tb, Ho and the like is lower than that of Nd, Br of the magnet is significantly reduced, so that Hcj of the magnet can be improved by using a small amount of heavy rare earth elements such as Dy, Tb, Ho and the like while ensuring the high Br of the magnet. When the R content in the magnet is too high, the neodymium-rich phase of the magnet is increased, leading to a reduction in Br; when the R content is too low, a uniform and continuous Nd-rich phase cannot form in the magnet to magnetically isolate the main phase grains, resulting in a sharp deterioration of Hcj and squareness of the magnet.

Because Co occupies the position of Fe in the main phase grains, and the atomic magnetic moment of Co is less than that of Fe, the addition of Co can reduce Br of the magnet. Therefore, Fe is controlled to account for not less than 99% of the total amount of T, and meanwhile, the corrosion resistance and the temperature resistance of Co to the magnet are compensated and improved by controlling other components and optimizing the process.

In the prior art, a high-performance neodymium-iron-boron magnet is prepared by adopting low B (≤ 0.95 wt%), and the grain boundary phase is thickened by forming an R-T-Ga type grain boundary phase, thereby improving Hcj of the magnet. However, the thickening of the grain boundary phase inevitably reduces the volume ratio of the main phase grains, thereby further significantly reducing the Br performance of the magnet. According to the present disclosure, by controlling the content of B, the volume ratio of the main phase grains is improved, and Br of the magnet is improved; when the content of B is too low, the proportion of the formed B-rich phase or Nd-rich phase is relatively high, and the volume ratio of the main phase grains is small, resulting in relatively low Br of the magnet; when the content of B is too high, the volume proportion of the B-rich phase is significantly increased, thereby greatly reducing the magnetic properties.

M1 is mainly enriched at the grain boundary phase, so that the grain boundary phase structure can be improved, and Hcj can be greatly increased. When the magnet does not contain Cu and Ga, the main phase grains and B-rich phase of the magnet are relatively coarse, so that the magnetic properties of the magnet are greatly reduced; when the contents of Cu and Ga in the magnet are too high, the growth of the grains is inhibited, and meanwhile, the grain boundary phase is thickened, such that the volume ratio of the main phase grains is reduced, thereby reducing the Br of the magnet. When the content of Ga specified in the present disclosure is reached, the Hcj of the magnet can be significantly improved, and the temperature coefficient of the magnet is significantly optimized, avoiding the impact of the low Co content on the temperature resistance of the magnet.

M2 forms an $A_2B$ type compound with B, which exists in the grain boundary phase and plays a role in inhibiting the abnormal growth of the grains in the magnet. When the content of M2 is too low, the $A_2B$ type compound cannot effectively form and exist to inhibit the abnormal growth of the main phase grains in the magnet; when the content of M2 is too high, the $A_2B$ type compound exists as a grain boundary phase, reducing the volume ratio of the main phase grains and preventing the magnet from achieving high Br.

The present disclosure further provides a preparation method for the neodymium-iron-boron magnet described above, comprising: (a) a smelting process: subjecting the starting materials for preparation of the neodymium-iron-boron magnet described above to high-temperature melting, casting, and secondary cooling to form an alloy slice; (b) a milling process: crushing the alloy slice into an alloy powder; (c) a pressing process: subjecting the alloy powder to press molding under the action of a magnetic field to obtain a blank; and (d) a sintering process: subjecting the blank to a high-temperature sintering treatment.

According to an embodiment of the present disclosure, the (a) smelting process specifically comprises: fully melting the starting materials for the preparation of the neodymium-iron-boron magnet described above into alloy steel liquid in vacuum or in an inert gas atmosphere, then performing rapid cooling to form an alloy slice, and further performing secondary cooling, wherein a interval between the secondary cooling and the rapid cooling is not more than 10 s, and the secondary cooling is performed at a cooling rate of 5-20 °C/s. Preferably, the melting is performed by medium-frequency induction heating in a vacuum induction smelting furnace. In the present disclosure, the rapid cooling method commonly used in the art may be selected for the rapid cooling, as long as the desired alloy slice can be obtained. Illustratively, the rapid cooling is performed by adopting a quenching roller.

In the present disclosure, the secondary cooling can be performed by adopting a cooling method and a cooling device commonly used in the art. Illustratively, the secondary cooling is performed by adopting any one of the following cooling devices: a spray of a low-temperature inert gas, a water-cooling disc, or cooling devices in other forms.

Preferably, the secondary cooling is performed at a cooling rate of 5-20 °C/s.

Preferably, the alloy slice has a thickness of 0.15-0.45 mm.

According to an embodiment of the present disclosure, the (b) milling process comprises coarse crushing and fine crushing.

Preferably, the coarse crushing is selected from hydrogen decrepitation and/or medium grinding.

Preferably, the fine crushing is selected from jet milling. Preferably, the jet milling is performed in an inert gas atmosphere. Preferably, the inert gas is selected from nitrogen, helium, and the like.

In the present disclosure, the hydrogen decrepitation, medium grinding or jet milling can be performed by adopting operations known in the art.

Preferably, after the fine crushing, the alloy powder is obtained through screening, for example, by means of a grading wheel.

Preferably, the granularity SMD of the alloy powder is between 2.0 $\mu$m and 3.4 $\mu$m, and X90/X10 ≤ 4.5, wherein SMD is the surface mean diameter, a smaller SMD indicates a smaller granularity of the powder particles, and a larger SMD indicates a larger granularity of the powder particles; X90 represents the particle size value corresponding to a cumulative distribution percentage reaching 90%, meaning that the particle size of all the particles is not larger than this particle size value, and the number of particles larger than this particle size value is 0; X10 represents the particle size value corresponding to a cumulative distribution percentage reaching 90%, meaning that the particle size of all the particles is not larger than this particle size value, and the number of particles larger than this particle size value is 0; X90/X10 is used to indicate the granularity distribution of the powder, with smaller X90/X10 characterizing a more concentrated granularity distribution of the powder.

Preferably, a lubricant needs to be added during the fine crushing, and preferably both before and after the jet milling. Adding the lubricant before the jet milling can enhance the flowability of the powder and improve the flowability and uniformity of the powder during the jet milling; adding the lubricant after the jet milling can also improve the uniformity and flowability of the powder, facilitating uniform powder filling and pressing.

Preferably, the lubricant is selected from reagents known in the art, and is used in an amount known in the art, with the aim of achieving a powder that is mixed homogeneously and easily moldable. Illustratively, the lubricant is selected from volatile organic solvents such as lipids, alcohols, or the like, for example, zinc stearate. Illustratively, the lubricant is added in an amount of 0.1-1 wt% of the total mass of the starting materials for the preparation.

Preferably, after the lubricant is added, further mixing is required. Preferably, the mixing is performed for a period of 3-6 h.

The mixing described in the present disclosure can be performed by methods known in the art, such as by placing the materials in a mixer for mixing.

According to an embodiment of the present disclosure, the (c) pressing process specifically comprises: subjecting the alloy powder to press molding under the action of a magnetic field to obtain a blank.

Preferably, the press molding is performed in a cavity of a press grinder tool.

Preferably, before the press molding, orientation magnetization and molding need to be performed under a magnetic field strength of 2 T.

Preferably, after the press molding, a reversed magnetic field is applied for demagnetization.

Preferably, the molded blank can also be treated in a cold isostatic press to further increase the density of the blank.

According to an embodiment of the present disclosure, the (d) sintering process comprises primary sintering, primary cooling, secondary sintering, and secondary cooling. The sintering process in the present disclosure can be performed by adopting methods known in the art. Illustratively, the blank is sintered in a sintering furnace.

Preferably, the sintering process is performed in vacuum. Preferably, during heating, the vacuum degree is not higher than $10^{-1}$ Pa.

Preferably, a sintering temperature of the primary sintering is 1000-1050 °C, and a heat holding time of the primary sintering is 240-360 min.

Preferably, a temperature for the secondary sintering is 30-70 °C higher than the temperature for the primary sintering, and is preferably 1030-1100 °C.

Preferably, a heat holding time of the second sintering is 270-360 min.

Preferably, both the primary cooling and the secondary cooling are performed below 200 °C.

According to an embodiment of the present disclosure, the sintering process further comprises an aging treatment, wherein the aging treatment is performed after the secondary cooling.

Preferably, the aging treatment is selected from a one-staged aging treatment or a two-staged aging treatment.

Preferably, the one-staged aging treatment is performed under the conditions of: an aging treatment temperature between 500 °C and 700 °C, and a heat holding time of 240-420 min.

Preferably, the two-staged aging treatment comprises: heating to perform a primary aging treatment at a temperature of 800-950 °C and with a heat holding time of 180-300 min; cooling to a temperature of not higher than 150 °C, and then heating to perform a secondary aging treatment at a temperature between 450 °C and 600 °C and with a heat holding time of 240-360 min.

According to an embodiment of the present disclosure, after the sintering process, a diffusion treatment can also be performed.

Preferably, the diffusion treatment comprises applying a diffusion material on the surface of the neodymium-iron-boron magnet, and performing a vacuum high-temperature diffusion treatment, diffusion cooling, and a diffusion aging treatment.

Preferably, the diffusion material is selected from pure metals of Dy and/or Tb, or alloys such as hydrides, oxides, hydroxides, fluorides and the like of Dy and/or Tb.

Preferably, the diffusion treatment can be performed by adopting vacuum evaporation, magnetron sputtering, coating, burying, or the like.

Preferably, the high-temperature diffusion is performed at a temperature of 850-950 °C for a period of 10-30 h.

Preferably, the diffusion cooling is performed at a temperature below 100 °C.

Preferably, the diffusion aging treatment is performed at a temperature of 450-600 °C for a period of 4-8 h.

According to an embodiment of the present disclosure, after the sintering process and before the diffusion treatment, the blank may be further processed to a target dimension.

The present disclosure requires strict restrictions on the conditions for each process in the preparation method for the neodymium-iron-boron magnet, with details as follows:

When the alloy steel liquid is rapidly cooled, for example, when the alloy steel liquid is rapidly cooled on a quenching roller, nucleation points are formed in an alloy slice on the roller surface of the quenching roller, and starting from the nucleation points, grains are formed and grown. The alloy slice falls off from the quenching roller, and the temperature of the alloy slice drops from the melting temperature to about 800 °C. At this point, the grains are still slowly growing, so it is necessary to perform secondary cooling in time to reduce the temperature of the alloy slice. When the secondary cooling is performed too late, the main phase grains on the alloy slice continue to grow, even secondary crystals are derived due to the non-uniform temperature distribution of the alloy slice, and the presence of these secondary crystals can cause the uniformity of the particle size of the main phase grains to be poor, thereby leading to a deterioration of the squareness of the magnet. When the cooling rate is too slow, the B-rich phase may be produced in large quantities in the grain boundary phase around the main phase grains, and the produced B-rich phase cannot be effectively eliminated or reduced in the processes of milling, sintering and the like, so that the magnetic properties are inevitably and rapidly deteriorated; when the cooling rate is too high, the alloy slice is rapidly cooled, and the main phase grains cease to grow and are unable to melt and absorb the surrounding grain boundary phase and B-rich for further growth, resulting in a relatively small volume and thus a reduction in Br of the magnet.

As can be seen from the above, due to the low content of R in the starting materials for the preparation of the magnet, in addition to the presence of binary and ternary grain boundary phases between the main phase grains on the alloy slice, there is also direct contact between some main phase grains, and these main phase grains in direct contact with each other have an extremely high bonding strength. When the granularity of the alloy powder is too small, the alloy powder particles are fractured with the grain boundary phase as a main fracture area, and meanwhile, in order to achieve the target powder granularity, internal fractures of the main phase grains also occur. The fractured powder has irregular size and surface state, and after sintering, it is easy for anti-magnetization points to form in the contact areas with adjacent grains and the grain boundary phase, which is manifested as a low squareness of the magnet, such that the magnet is susceptible to demagnetization under the action of high temperature or other external magnetic fields. When the granularity of the powder is too large, the grain boundary phase cannot sufficiently separate from the main phase grains, so that during sintering, the main phase grains grow by melting the attached Nd-rich phase, and thus there is not enough Nd-rich phase to encapsulate the main phase grains, resulting in a large reduction in Hcj of the magnet. When the granularity distribution X90/X10 of the powder is within the range of the present disclosure, a magnet with uniform particle size can be obtained, which then possesses relatively high Br and Hcj. When the granularity distribution X90/X10 is too large, there is a relatively significant difference in the size of the magnet grains, the fine powder tends to agglomerate and melt to form a triangular grain boundary phase, and adjacent coarse powder melts to form large grains; all of these factors can seriously affect the squareness of the magnet.

Meanwhile, according to the present disclosure, by adopting the two-staged sintering process, the properties of the magnet can be greatly improved, and the abnormal growth of the grains of the magnet can be effectively inhibited. According to the preparation method for the neodymium-iron-boron magnet involved in the present disclosure, the temperature for the secondary sintering is higher than the temperature for the primary sintering; the primary sintering is performed at a lower temperature, so that the compactness of the magnet can be improved, but some gaps still exist, which prevents the abnormal growth of the main phase grains; the temperature for the secondary sintering is greatly increased compared with the temperature for the primary sintering, so that the full growth of the main phase grains can be promoted without causing abnormal growth of the main phase grains, thus preventing a sharp deterioration of the magnetic properties. When the temperature difference between the two sintering steps is too low, in order to ensure the compactness of the sintered magnet, the temperature for the primary sintering is relatively high, which results in a relatively tight arrangement of the grains, such that the relatively low temperature for the secondary sintering cannot fully reset and optimize the grain structure of the magnet, leading to an inability to achieve higher magnetic properties. When the temperature difference between the two sintering steps is too large, the temperature for the primary sintering is relatively low, which results in large gaps, such that the too high temperature for the secondary sintering causes abnormal growth of the grains in partial areas, resulting in a deterioration of the properties of the magnet.

The present disclosure further provides use of the neodymium-iron-boron magnet described above in the field of motors.

The present disclosure further provides a motor, which comprises the neodymium-iron-boron magnet described above.

The present disclosure further provides use of the motor described above, wherein preferably, the motor can be used in new energy vehicles and energy-saving household appliances.

Beneficial Effects:

According to the neodymium-iron-boron magnet of the present disclosure, by adjusting the proportional relation of elements such as B, Cu, Ga, RE, Ti and the like, a relatively high volume ratio of main phase grains can be achieved, and the proportion of a B-rich phase in a grain boundary phase can be effectively restrained; and through the addition of transition metal elements M1 (such as Ga) and M2 (such as Ti), the structure of the grain boundary phase is optimized and adjusted, such that the magnet is endowed with relatively high Br, while also possessing excellent Hcj and squareness properties.

In the present disclosure, the content of B in the magnet described herein is higher than that in a general sintered neodymium-iron-boron magnet. In the general neodymium-iron-boron magnet, when the properties of Br and Hcj of the magnet are both considered, the ratio of [R]/([B] - 2[M2]) is slightly greater than 2.35 and greater than 2.5, so that the magnet has relatively less B-rich phase or does not form the B-rich phase. The present disclosure maintains this ratio between 2.15 and 2.35, which theoretically can lead to the formation of more B-rich phase compared to the general common neodymium-iron-boron magnet. However, within the proportional range of the formula described herein, combined with the secondary cooling in the preparation method of the present disclosure, the volume ratio of the main phase grains of the magnet can be improved, and the excessive formation of the B-rich phase is inhibited, such that the Br of the magnet is ensured, and meanwhile, the magnet has excellent Hcj and squareness indexes.

The magnet of the present disclosure adopts a very small amount of heavy rare earth elements such as Dy/Tb and the like, or even none at all, so that high remanence and high coercivity can be achieved, and the squareness of the magnet is not less than 0.95; the production process is simple, and the stability in mass production is high.

The magnet prepared by the preparation method of the present disclosure has high remanence, with Br of not less than 1.44 T and very high energy density. When applied to a motor, it can effectively improve the power output per unit volume, effectively reduce the volume of the motor, and save the material loss of other components of the motor, thereby playing an important role in the miniaturization and low cost development of motors.

## DETAILED DESCRIPTION

The technical solutions of the present disclosure will be further described in detail with reference to the following specific examples. It should be understood that the following examples are merely exemplary illustrations and explanations of the present disclosure, and should not be construed as limiting the protection scope of the present disclosure. All techniques implemented based on the content of the present disclosure described above are included within the protection scope of the present disclosure.

Unless otherwise stated, the starting materials and reagents used in the following examples are all commercially available products, or can be prepared by using known methods.

In the following examples, the atomic percentage means [the number of a certain atom]/[the total number of various atoms in the starting materials]. M1 is selected from Cu and Ga; M2 is selected from at least one of Zr, Ti and Nb; R is selected from Nd plus at least one of the following rare earth elements: Pr, La, Ce, Dy, Tb, and Ho.

Examples 1-4:

(1) According to the target components of each magnet in Table 1, starting materials were prepared, and a neodymium-iron-boron alloy slice was obtained by adopting a strip casting process. The alloy slice was cooled on a quenching roller and fell off, and then subjected to secondary cooling by a spray of low-temperature argon gas. By regulating the flow and temperature of the low-temperature argon gas, the alloy slice was secondarily cooled at a cooling rate of 10 °C/s to obtain a cooled alloy slice, which was then dropped onto a water-cooling disc for recovery, thus giving an alloy slice with a thickness of 0.15-0.45 mm.

Table 1. Target components (in mass percentage) of neodymium-iron-boron magnets in the examples

| No. | Pr | Nd | Dy | B | Co | Cu | Ga | Al | Zr | Fe and impurity elements |
|---|---|---|---|---|---|---|---|---|---|---|
| Example 1 | - | 29 | 0.5 | 0.99 | - | 0.05 | 0.25 | - | 0.12 | Balance |
| Example 2 | - | 29 | 0.5 | 1.03 | - | 0.05 | 0.25 | - | 0.12 | Balance |
| Example 3 | 6 | 23.8 | - | 1.02 | 0.05 | - | 0.2 | 0.05 | 0.08 | Balance |
| Example 4 | - | 29 | - | 1.04 | - | 0.05 | 0.25 | - | 0.12 | Balance |

(2) The alloy slice described above was subjected to a coarse crushing treatment by adopting a hydrogen decrepitation process to obtain a powder. To the powder, zinc stearate was added as a lubricant at 0.1 wt% of the mass of the starting material. The mixture was mixed for 60 min. The mixed materials were subjected to a fine crushing treatment in a fluidized bed-type jet mill by using nitrogen as the grinding gas and adjusting equipment parameters such as the rotation speed of a grading wheel, the grinding pressure and the like, so as to obtain a jet-milled powder with a target granularity SMD of 2.5 μm.

(3) To the prepared jet-milled powder with the target granularity, zinc stearate was added as a lubricant at 0.2 wt% of the mass of the starting material. The mixture was thoroughly mixed and pressed into a blank under a magnetizing field strength of 2 T. The blank was then subjected to an oil cold isostatic pressing treatment to achieve improved compactness.

(4) The blank was placed in a sintering furnace and subjected to a two-staged sintering treatment in vacuum, with both sintering steps being performed with a heat holding time of 270 min. After sintering, the blank was cooled to below 80 °C and then heated to 890 °C for heat holding for 240 min. The blank was cooled and then subjected to secondary aging with a heat holding time of 280 min, with the aging temperature adjusted to the optimum according to different components. Details of the sintering and aging regimen are shown in Table 2.

Table 2. Average thickness of alloy slice, granularity of jet-milled powder, and sintering process in Examples 1-4

| No. | Average thickness (mm) of alloy slice | SMD (μm) | X90/X10 | Temperature for primary sintering (°C) | Temperature for secondary sintering (°C) | Temperature for secondary aging (°C) |
|---|---|---|---|---|---|---|
| Example 1 | 0.22 | 2.5 | 4.3 | 1030 | 1060 | 480 |
| Example 2 | 0.23 | 2.5 | 4.4 | 1030 | 1070 | 500 |
| Example 3 | 0.24 | 2.5 | 4.2 | 1040 | 1080 | 500 |
| Example 4 | 0.23 | 2.5 | 4.3 | 1040 | 1080 | 490 |

The neodymium-iron-boron magnets after the sintering and aging treatments were each processed into a standard sample column with a diameter of 10 mm and a height of 10 mm. The properties of the neodymium-iron-boron magnets were tested by adopting a BH instrument, and the specific test results for the magnetic properties are shown in Table 3.

Table 3. Test results for the magnetic properties in examples

| No. | Br (T) 20°C | Br (T) 120°C | α(Br) (%/°C) 20-120°C | Hcj (kA/m) | Hk/Hcj (squareness) | Cu/(Cu+Ga) * >0.75 | [M2]** 0.04-015 | [R]/([B]-2[M2])** 2.15-2.35 |
|---|---|---|---|---|---|---|---|---|
| Example 1 | 1.45 | 1.301 | -0.103 | 1150 | 0.98 | 0.83 | 0.12 | 2.29 |
| Example 2 | 1.455 | 1.31 | -0.997 | 1140 | 0.98 | 0.83 | 0.12 | 2.20 |
| Example 3 | 1.45 | 1.303 | -0.101 | 1120 | 0.98 | 1.00 | 0.08 | 2.24 |
| Example 4 | 1.47 | 1.319 | -0.103 | 1100 | 0.96 | 0.83 | 0.12 | 2.15 |
|  | * Mass percentages of Cu and Ga in the starting materials; ** [R] is an atomic percentage of R, [B] is an atomic percentage of B, and [M2] is an atomic percentage of M2. | | | | | | | |

According to the results in Table 3, it can be seen that when the element components were within the controlled range, the neodymium-iron-boron magnet could have relatively high remanence and coercivity, while ensuring that the squareness can be greater than or equal to 0.95. This ensures that the neodymium-iron-boron magnet can provide a stable power output when the motor is running.

Comparative Examples 1-2

According to the target components of each magnet in Table 4, starting materials were prepared, and a neodymium-iron-boron alloy slice was obtained by adopting a strip casting process. The alloy slice was cooled on a quenching roller and fell off, and then subjected to secondary cooling by a spray of low-temperature argon gas. By regulating the flow and temperature of the low-temperature argon gas, the alloy slice was secondarily cooled at a cooling rate of 10 °C/s to obtain a cooled alloy slice, which was then dropped onto a water-cooling disc for recovery, thus giving an alloy slice.

Comparative Example 3

According to the target components of each magnet in Table 4, starting materials were prepared, and a neodymium-iron-boron alloy slice was obtained by adopting a strip casting process. The alloy slice was rapidly cooled on a quenching roller and then directly dropped onto a water-cooling disc for cooling and recovery.

Comparative Example 4

According to the target components of each magnet in Table 4, starting materials were prepared, and a neodymium-iron-boron alloy slice was obtained by adopting a strip casting process. The alloy slice was rapidly cooled on a quenching roller and then directly dropped onto a water-cooling disc for cooling and recovery.

Table 4. Target components (in mass percentages) of magnets in Comparative Examples 1-4

| No. | Pr | Nd | Dy | B | Co | Cu | Ga | Ti | Zr | Fe and impurity elements |
|---|---|---|---|---|---|---|---|---|---|---|
| Comparative Example 1 | - | 29 | 0.5 | 0.93 | - | 0.05 | 0.25 | - | 0.12 | Balance |
| Comparative Example 2 | - | 29 | 0.5 | 1.03 | - | 0.05 | 0.25 | - | 0.12 | Balance |
| Comparative Example 3 | - | 29 | 0.5 | 0.99 | - | 0.05 | 0.25 | - | 0.12 | Balance |
| Comparative Example 4 | - | 28.6 | 0.1 | 1.01 | - | 0.07 | 0.15 | 0.15 | - | Balance |

The alloy slices obtained in Comparative Examples 1-4 were each prepared into a jet-milled powder with a target SMD of 2.5 μm according to the same procedure as in the examples, and then pressed and subjected to sintering and aging treatments. See Table 5 for specific process parameters.

Table 5. Average thickness of alloy slice, granularity of jet-milled powder, and sintering process in comparative examples

| No. | Average thickness (mm) of alloy slice | SMD (μm) | X90/X10 | Temperature for primary sintering (°C) | Temperature for secondary sintering (°C) | Temperature for secondary aging (°C) |
|---|---|---|---|---|---|---|
| Comparative Example 1 | 0.22 | 2.5 | 4.3 | 1020 | 1060 | 540 |
| Comparative Example 2 | 0.23 | 2.5 | 4.2 | 1040 | 1080 | 500 |
| Comparative Example 3 | 0.25 | 2.5 | 4.3 | 1045 | - | 510 |
| Comparative Example 4 | 0.25 | 2.5 | 4.5 | 1065 | - | 490 |

The neodymium-iron-boron magnets prepared in Comparative Examples 1-4 were each processed into a standard sample column with a diameter of 10 mm and a height of 10 mm. The properties of the neodymium-iron-boron magnets were tested by adopting a BH instrument, and the specific test results for the magnetic properties are shown in Table 6.

Table 6. Test results for the magnetic properties in Comparative Examples 1-4

| No. | Br(T) 20°C | Br (T) 120°C | α(Br) (%/°C) 20-120°C | Hcj (kA/m) | Hk/Hcj (squareness) | Cu/ (Cu+Ga) * >0.75 | [M2]** 0.04-015 | [R]/( [B]-2 [M2]) ** |
|---|---|---|---|---|---|---|---|---|
| Comparative Example 1 | 1.42 | 1.273 | -0.104 | 1200 | 0.93 | 0.83 | 0.12 | 2.45 |
| Comparative Example 2 | 1.42 | 1.277 | -0.101 | 1030 | 0.98 | 0.25 | 0.08 | 2.24 |
| Comparative Example 3 | 1.43 | 1.284 | -0.102 | 1060 | 0.97 | 0.83 | 0.12 | 2.45 |
| Comparative Example 4 | 1.45 | 1.298 | -0.105 | 986 | 0.91 | 0.68 | 0.15 | 2.28 |
| | * Mass percentages of Cu and Ga in the starting materials; <br> ** [R] is an atomic percentage of R, [B] is an atomic percentage of B, and [M2] is an atomic percentage of M2. | | | | | | | |

According to Comparative Example 1, it can be seen that when the value of the proportional relation for [R], [B] and [M2] exceeded 2.35, although there was a slight increase in Hcj, the Br is significantly decreased, and the squareness was lower than 0.95, resulting in fluctuations in the demagnetization resistance and failure to stabilize the magnetic field output during high-speed operation of the motor.

In Comparative Example 2, the value of the proportional relation for [Cu] and [Ga] was far less than 0.75, so that the Br and Hcj of the neodymium-iron-boron magnet were significantly reduced as compared with those of the examples, preventing the achievement of both high remanence and high coercivity.

In Comparative Example 3, the target magnet components were the same as those in Example 1, but the alloy slice was not subjected to secondary cooling during the smelting process in the manner required in this patent. According to Table 3, it can be seen that when the secondary cooling of the alloy slice was omitted, the significant growth of grains caused an increase in the thickness of the alloy slice; although a jet-milled powder with the target SMD was also obtained during jet milling, the granularity distribution (X90/X10) was significantly deteriorated, with an increased ratio of coarse powder to fine powder, resulting in poor uniformity of the powder; and in the sintering process, the sintering was performed once, without the use of the two-staged sintering process, so that the remanence and coercivity of the neodymium-iron-boron magnet were also obviously reduced.

According to Comparative Example 4, it can be seen that when the value of the proportional relation for [Cu] and [Ga] was less than 0.75, and the secondary cooling and two-staged sintering process described herein were not adopted, the Hcj was significantly lower, and the squareness is far lower than 0.95, resulting in fluctuations in the demagnetization resistance and failure to stabilize the magnetic field output during high-speed operation of the motor.

Example 5

The neodymium-iron-boron magnet after sintering and aging in Example 1 was processed into a sheet product measuring 20 mm in length, 20 mm in width, and 5 mm in thickness. A layer of metal Dy membrane was applied to the surface of the neodymium-iron-boron magnet by adopting a dipping process, followed by a diffusion treatment at 900 °C for 15 h. After the diffusion temperature was cooled to below 100 °C, the temperature was again raised to 500 °C for an aging treatment for 5 h. The final magnet was subjected to a magnetic property test and a composition test. The final composition and the magnetic properties of the neodymium-iron-boron magnet are shown in Tables 9 and 10.

Table 9. Composition test results of Example 5

| No. | Pr | Nd | Dy | B | Co | Cu | Ga | Al | Zr | Fe and impurity elements |
|---|---|---|---|---|---|---|---|---|---|---|
| Example 5 | - | 28.6 | 0.8 | 0.99 | - | 0.05 | 0.25 | - | 0.12 | Balance |

Table 10. Magnetic property test results of Example 5

| No. | Br (T) | Br(T) 120°C | α(Br)(%/°C) 20-120°C | Hcj (kA/m) | Hk/Hcj (squareness) | Cu/(Cu+Ga) * >0.75 | [M2]** 0.04-015 | [R]/([B]-2[M2])** 2.15-2.35 |
|---|---|---|---|---|---|---|---|---|
| Example 5 | 1.43 | 1.289 | -0.099 | 1750 | 0.98 | 0.83 | 0.12 | 2.26 |
| | * Mass percentages of Cu and Ga in the starting materials; <br> ** [R] is an atomic percentage of R, [B] is an atomic percentage of B, and [M2] is an atomic percentage of M2. | | | | | | | |

From the above results, it can be seen that the coercivity of the post-diffusion magnet was significantly increased, and the Br thereof was not significantly reduced, such that the neodymium-iron-boron magnet of the present disclosure can also be used as a diffusion substrate.

The illustrative embodiments of the present disclosure have been described above. However, the present disclosure is not limited to the embodiments described above. Any modification, equivalent, improvement, and the like made by those skilled in the art without departing from the spirit and principle of the present disclosure shall fall within the protection scope of the present disclosure.

## Claims

1. A neodymium-iron-boron magnet, wherein the neodymium-iron-boron magnet has grains that take an R-T-B type compound as a main structure, and a grain boundary phase; and the neodymium-iron-boron magnet comprises:

   not less than 28 wt% and not more than 30 wt% of R, wherein R represents a rare earth element selected from Nd, or Nd plus at least one of the following rare earth elements: Pr, La, Ce, Dy, Tb, and Ho;
   not less than 63 wt% and not more than 70 wt% of T, wherein T is selected from Fe and/or Co, wherein Fe accounts for not less than 99 wt% of the total amount of T;
   not less than 0.98 wt% and not more than 1.05 wt% of B;
   not less than 0 wt% and not more than 0.3 wt% of M1, wherein M1 is selected from Cu and Ga, and Ga accounts for not less than 75 wt% of the total amount of M1; and
   not less than 0.04 wt% and not more than 0.15 wt% of M2, wherein M2 is selected from at least one of Zr, Ti, and Nb;
   in starting materials for preparation of the neodymium-iron-boron magnet, the number of atoms of the elements further satisfies the following condition:

   $$2.15 \leq [R]/([B] - 2[M2]) \leq 2.35,$$

   wherein [R] is an atomic percentage of R, [B] is an atomic percentage of B, and [M2] is an atomic percentage of M2;
   when R is selected from Nd plus at least one of the following rare earth elements: Pr, La, Ce, Dy, Tb, and Ho, the total mass of the heavy rare earth elements such as Dy, Tb, Ho and the like accounts for not more than 1 wt% of the mass of the neodymium-iron-boron magnet;
   the neodymium-iron-boron magnet has the following magnetic properties:

   (4) a squareness of not less than 0.95;
   (5) Br of not less than 1.44 T; and
   (6) Hcj of not less than 1100 kA/m.

2. The neodymium-iron-boron magnet as claimed in claim 1, wherein the total mass of the heavy rare earth elements such as Dy, Tb, Ho and the like accounts for not more than 0.5 wt% of the mass of the neodymium-iron-boron magnet; preferably, M2 is selected from Ti.

3. A preparation method for the neodymium-iron-boron magnet as claimed in claim 1 or 2, comprising: (a) a smelting process: subjecting the starting materials for preparation of the neodymium-iron-boron magnet described above to high-temperature melting, casting, and secondary cooling to form an alloy slice; (b) a milling process: crushing the alloy slice into an alloy powder; (c) a pressing process: subjecting the alloy powder to press molding under the action of a magnetic field to obtain a blank; and (d) a sintering process: subjecting the blank to a high-temperature sintering treatment.

4. The preparation method as claimed in claim 3, wherein the (a) smelting process specifically comprises: fully melting the starting materials for the preparation of the neodymium-iron-boron magnet described above into alloy steel liquid in vacuum or in an inert gas atmosphere, then performing rapid cooling to form an alloy slice, and further performing secondary cooling, wherein a interval between the secondary cooling and the rapid cooling is not more than 10 s, and the secondary cooling is performed at a cooling rate of 5-20 °C/s.

5. The preparation method as claimed in claim 3 or 4, wherein the rapid cooling is performed by adopting a quenching roller;

    preferably, the secondary cooling is performed by adopting any one of the following cooling devices: a spray of a low-temperature inert gas, a water-cooling disc, or cooling devices in other forms;
    preferably, the secondary cooling is performed at a cooling rate of 5-20 °C/s;
    preferably, the alloy slice has a thickness of 0.15-0.45 mm.

6. The preparation method as claimed in any one of claims 3-5, wherein the (b) milling process comprises coarse crushing and fine crushing;

    preferably, the coarse crushing is selected from hydrogen decrepitation and/or medium grinding;
    preferably, the fine crushing is selected from jet milling; preferably, the jet milling is performed in an inert gas atmosphere; preferably, the inert gas is selected from nitrogen, helium, and the like;
    preferably, after the fine crushing, the alloy powder is obtained through screening, for example, by means of a grading wheel;
    preferably, the granularity SMD of the alloy powder is between 2.0 $\mu$m and 3.4 $\mu$m, and X90/X10 $\leq$ 4.5;
    preferably, a lubricant needs to be added during the fine crushing, and preferably both before and after the jet milling; preferably, the lubricant is selected from volatile organic solvents such as lipids, alcohols, or the like; illustratively, the lubricant is added in an amount of 0.1-1 wt% of the total mass of the starting materials for the preparation;
    preferably, after the lubricant is added, further mixing is required; preferably, the mixing is performed for a period of 3-6 h;
    preferably, the (c) pressing process specifically comprises: subjecting the alloy powder to press molding under the action of a magnetic field to obtain a blank;
    preferably, before the press molding, orientation magnetization and molding need to be performed under a magnetic field strength of 2 T;
    preferably, after the press molding, a reversed magnetic field is applied for demagnetization; preferably, the molded blank can also be treated in a cold isostatic press to further increase the density of the blank.

7. The preparation method as claimed in any one of claims 3-6, wherein the (d) sintering process comprises primary sintering, primary cooling, secondary sintering, and secondary cooling;

    preferably, the sintering process is performed in vacuum; preferably, during heating, the vacuum degree is not higher than $10^{-1}$ Pa;
    preferably, a temperature of the primary sintering is 1000-1050 °C and a heat holding time of the primary sintering is 240-360 min;
    preferably, a temperature for the secondary sintering is 30-70 °C higher than the temperature for the primary sintering, and is preferably 1030-1100 °C;
    preferably, a heat holding time of the second sintering is 270-360 min;
    preferably, both the primary cooling and the secondary cooling are performed below 200 °C; preferably, the sintering process further comprises an aging treatment, wherein the aging treatment is performed after the secondary cooling;
    preferably, the aging treatment is selected from a one-staged aging treatment or a two-staged aging treatment;
    preferably, the one-staged aging treatment is performed under the conditions of: an aging treatment temperature between 500 °C and 700 °C, and a heat holding time of 240-420 min;
    preferably, the two-staged aging treatment comprises: heating to perform a primary aging treatment at a temperature of 800-950 °C and with a heat holding time of 180-300 min; cooling to a temperature of not higher than 150 °C, and then heating to perform a secondary aging treatment at a temperature between 450 °C and 600 °C and with a heat holding time of 240-360 min;

preferably, after the sintering process, a diffusion treatment can also be performed;

preferably, the diffusion treatment comprises applying a diffusion material on the surface of the neodymium-iron-boron magnet, and performing a vacuum high-temperature diffusion treatment, diffusion cooling, and a diffusion aging treatment;

preferably, the diffusion material is selected from pure metals of Dy and/or Tb, or alloys such as hydrides, oxides, hydroxides, fluorides and the like of Dy and/or Tb;

preferably, the diffusion treatment can be performed by adopting vacuum evaporation, magnetron sputtering, coating, burying, or the like;

preferably, the high-temperature diffusion is performed at a temperature of 850-950 °C for a period of 10-30 h;

preferably, the diffusion cooling is performed at a temperature below 100 °C;

preferably, the diffusion aging treatment is performed at a temperature of 450-600 °C for a period of 4-8 h.

8. Use of the neodymium-iron-boron magnet as claimed in claims 1-2 in a field of motors.

9. A motor, comprising the neodymium-iron-boron magnet as claimed in claims 1-2.

10. Use of the motor as claimed in claim 9, wherein preferably, the motor can be used in new energy vehicles and energy-saving household appliances.

<div align="center">

**INTERNATIONAL SEARCH REPORT**

</div>

| International application No. |
| --- |
| **PCT/CN2022/120487** |

**A. CLASSIFICATION OF SUBJECT MATTER**

H01F 1/057(2006.01)i

According to International Patent Classification (IPC) or to both national classification and IPC

**B. FIELDS SEARCHED**

Minimum documentation searched (classification system followed by classification symbols)

H01F

Documentation searched other than minimum documentation to the extent that such documents are included in the fields searched

Electronic data base consulted during the international search (name of data base and, where practicable, search terms used)

CNPAT, WPI, IEEE, CNKI: 磁体, 钕铁硼, 界面, 结晶, MEG+, ND, FE, B, interface, crystal, 含量, 占比, 铜, cu, copper, ga, 镓, 稀土, rare earth

**C. DOCUMENTS CONSIDERED TO BE RELEVANT**

| Category* | Citation of document, with indication, where appropriate, of the relevant passages | Relevant to claim No. |
| --- | --- | --- |
| PX | CN 113921218 A (YANTAI ZHENGHAI MAGNETIC MATERIAL CO., LTD. et al.) 11 January 2022 (2022-01-11) description, paragraphs 8-123 | 1-10 |
| A | CN 111223625 A (XIAMEN TUNGSTEN CO., LTD. et al.) 02 June 2020 (2020-06-02) description, paragraphs 6-333 | 1-10 |
| A | CN 111834118 A (NINGBO PERMANENT MAGNETICS CO., LTD.) 27 October 2020 (2020-10-27) entire document | 1-10 |
| A | CN 106205924 A (YANTAI ZHENGHAI MAGNETIC MATERIAL CO., LTD.) 07 December 2016 (2016-12-07) entire document | 1-10 |
| A | CN 107464644 A (JINGCI MATERIAL SCIENCE CO., LTD.) 12 December 2017 (2017-12-12) entire document | 1-10 |
| A | WO 2016111346 A1 (INTERMETALLICS CO., LTD.) 14 July 2016 (2016-07-14) entire document | 1-10 |

☐ Further documents are listed in the continuation of Box C.  ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **18 November 2022** | **30 November 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/120487**

| Patent document cited in search report | | | Publication date (day/month/year) | Patent family member(s) | | | Publication date (day/month/year) |
|---|---|---|---|---|---|---|---|
| CN | 113921218 | A | 11 January 2022 | None | | | |
| CN | 111223625 | A | 02 June 2020 | WO | 2021169888 | A1 | 02 September 2021 |
| CN | 111834118 | A | 27 October 2020 | None | | | |
| CN | 106205924 | A | 07 December 2016 | None | | | |
| CN | 107464644 | A | 12 December 2017 | None | | | |
| WO | 2016111346 | A1 | 14 July 2016 | CN | 107112125 | A | 29 August 2017 |
| | | | | EP | 3244426 | A1 | 15 November 2017 |
| | | | | US | 2018012701 | A1 | 11 January 2018 |
| | | | | JP | 6205511 | B2 | 27 September 2017 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111107088
- CN 11724985 A
- CN 10744699 A